(19) Europäisches Patentamt
European Patent Office
Office européen des brevets

(11) EP 3 199 984 A1

(12) EUROPEAN PATENT APPLICATION

(43) Date of publication:
02.08.2017 Bulletin 2017/31

(51) Int Cl.:
G02B 1/11 (2015.01)
C01B 33/145 (2006.01)
B82Y 30/00 (2011.01)
G02B 1/113 (2015.01)

(21) Application number: 17000093.9

(22) Date of filing: 20.01.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 01.02.2016 JP 2016017544

(71) Applicant: CANON KABUSHIKI KAISHA
Tokyo (JP)

(72) Inventors:
• Kameno, Yu
  Tokyo (JP)
• Makino, Kenji
  Tokyo (JP)

(74) Representative: WESER & Kollegen
Radeckestraße 43
81245 München (DE)

(54) ANTIREFLECTION FILM, OPTICAL MEMBER, AND METHOD FOR MANUFACTURING OPTICAL MEMBER

(57) An optical member (1) includes a base material (2) and a film (3) on the base material (2), the film (3) includes hollow particles (4) that have prickle-like protrusions on their surface, the heights (34) of the protrusions are 3 nm or more and 20 nm or less, the proportion of the prickle-like protrusions is 3% or more and 30% or less of the particle surface, and the film (3) includes 50 percent by volume or more and 68 percent by volume or less of hollow particles (4). Consequently, an antireflection film (3) having a low refractive index and a low level of scattering in combination is provided.

FIG. 1

**Description**

BACKGROUND OF THE INVENTION

Field of the Invention

The present disclosure relates to an antireflection film, in which scattering of incident light is at a low level and which has a low refractive index, and to an optical member and a method for manufacturing the optical member.

Description of the Related Art

To date, antireflection films having a thickness of several tens to several hundreds of nanometers and being composed of a single optical film or stacked optical films that have different refractive indices have been formed in order to suppress reflection at a light incidence and emission interface of an optical device. Dry film formation methods, e.g., vapor deposition and sputtering, and wet film formation methods, e.g., dip coating and spin coating, are used for forming the antireflection film.

It is known that inorganic materials, e.g., silica, magnesium fluoride, and calcium fluoride, and organic materials, e.g., silicone resins and amorphous fluororesins, which are transparent materials having low refractive indices, are employed as the material used for forming an outermost layer of the antireflection film.

It is also known that a low-refractive-index film that utilizes the refractive index of air of 1.0 is used for the antireflection film in order to decrease the refractive index. It is possible to decrease the refractive index by forming gaps in the layers of silica and magnesium fluoride.

Japanese Patent Laid-Open No. 2001-233611 discloses an antireflection film produced by making a film from a paint in which spherical silica-based hollow particles and a binder for cross-linking the particles with each other are mixed.

Japanese Patent Laid-Open No. 2013-41275 discloses a low-refractive-index antireflection film, wherein the refractive index (nd) of the antireflection film is decreased to about 1.25 by adopting a process for making a film from silica-based hollow particles and, thereafter, making a film from a binder solution such that the particles are arrayed and the size of gaps between particles is reduced.

In the low-refractive-index antireflection film described in Japanese Patent Laid-Open No. 2013-41275, it is effective to minimize the amount of the binder in order to decrease the refractive index. In the case of an antireflection film containing a small amount of binder or no binder, it is effective to increase the size of gaps between the particles in order to further decrease the refractive index. However, in the case where common silica particles are arrayed and disposed so as to come into contact with each other, the distance between particles is substantially equal to the diameter of the outer periphery of the particle. In the case where the silica particles are disposed without being arrayed, large gaps are formed between the particles, and optical scattering increases.

SUMMARY OF THE INVENTION

The present disclosure provides an antireflection film including fine particles, e.g., silica particles, which have a low refractive index, wherein light scattering is suppressed and the refractive index is further decreased.

The present invention in its first aspect provides an optical member as specified in claims 1 to 6.

The present invention in its second aspect provides an antireflection film as specified in claims 7 to 11.

The present invention in its third aspect provides a method for manufacturing hollow particles that have a surface and prickle-like protrusions on the surface as specified in claims 12 and 13.

The present invention in its fourth aspect provides a method for manufacturing an optical member as specified in claim 14.

According to the present disclosure, an antireflection film, which includes hollow particles that have fine prickle-like protrusions on their surface and which has a low refractive index and a low level of scattering, and an optical member are provided.

Further features of the present disclosure will become apparent from the following description of exemplary embodiments with reference to the attached drawings.

BRIEF DESCRIPTION OF THE DRAWINGS

Fig. 1 is a schematic sectional view of an antireflection film.
Fig. 2 is a sectional view of an antireflection film in the case where particles not having protrusions on their surface are used.

Fig. 3 is a schematic sectional view of a hollow particle used for the antireflection film.

Fig. 4 is a cross-sectional image of an antireflection film obtained in Example 1.

DESCRIPTION OF THE EMBODIMENTS

An antireflection film according to the present disclosure may be utilized for optical elements having a function of reducing the amounts of interfacial reflection at light incidence and emission surfaces, for example, imaging equipment, e.g., still cameras and video cameras, projection equipment, e.g., liquid crystal projectors and optical scanning apparatuses of electrophotographic equipment. The example embodiments will be described below in detail with reference to the drawings.

Optical member

An optical member may be used for optical films, lenses, prisms, and the like.

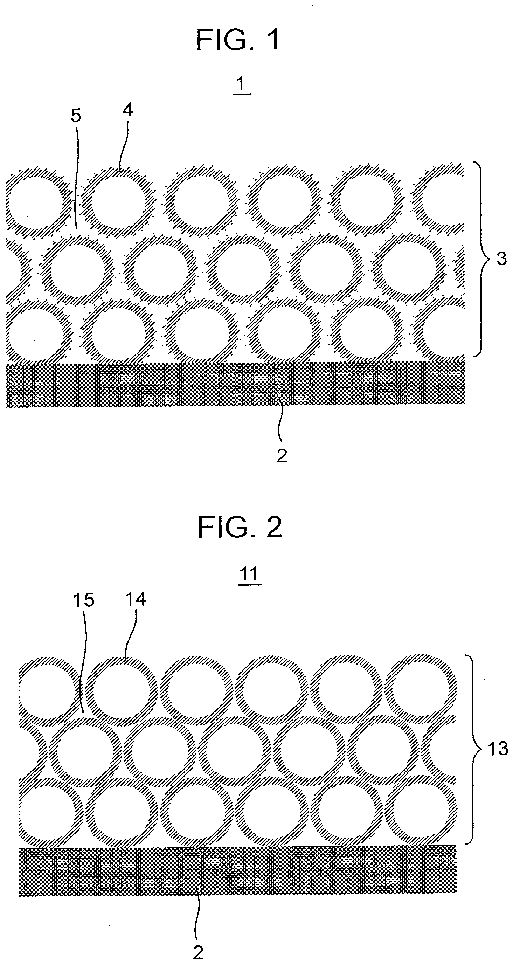

Fig. 1 is a schematic diagram showing an optical member 1.

In the optical member 1, an antireflection film 3 is disposed on a base material 2.

Plastic or glass may be used as the base material 2.

Antireflection film

As shown in Fig. 1, the antireflection film 3 includes hollow particles 4 that have fine prickle-like protrusions on their surface. In the case where the hollow particles 4 that have fine prickle-like protrusions on their surface are arrayed, contact between spherical portions of the hollow particles 4 is hindered by the prickle-like protrusions and the hollow particles 4 are arrayed with small gaps 5 present between the particles. Therefore, in the antireflection film 3 including the hollow particles 4 that have prickle-like protrusions on their surface, the air content in the entire antireflection film increases without disturbing arrays to a great extent during coating. Consequently, the antireflection film 3 having a low refractive index and a low level of scattering is produced by appropriately selecting the sizes of the prickle-like protrusions.

In contrast, as shown in Fig. 2, an optical member 11 including an antireflection film 13 containing hollow particles 14 that have no fine prickle-like protrusions on their surface have a small size of gaps, a high refractive index, and a low level of antireflection performance compared with the antireflection film 3 containing hollow particles that have prickle-like protrusions.

The spatial filling ratio of the antireflection film 3 with the hollow particles 4 is preferably 50 percent by volume or more and 68 percent by volume or less. If the spatial filling ratio of the hollow particles 4 is less than 50 percent by volume, the size of gaps between the particles increases and light scattering increases. If the spatial filling ratio of the hollow particles 4 is more than 68 percent by volume, the size of gaps is reduced and the refractive index does not substantially decrease compared with that of the antireflection film shown in Fig. 2. In this regard, the theoretical maximum filling ratio is 74.1% where a single type of spherical particle is closest-packed (perfectly arrayed state), as shown in Fig. 2.

The spatial filling ratio (F) of the particles is determined on the basis of (Formula 1) below. In (Formula 1), "a" represents an average particle size of fine particles, which may be determined by a dynamic light scattering method (DLS), and "b" represents an average distance between centers of gravity, which may be determined on the basis of image processing, by using commercially available image processing software, e.g., image Pro PLUS (produced by Media Cybernetics, Inc.), of an image obtained by observing the film surface under a scanning electron microscope. In this regard, the average distance between centers of gravity b is specified as an average of distances b between a particle and 6 nearby particles, the calculation is performed with respect to each of at least 20 particles, and an averaged value is employed.

$$F = \{2 \times (4/3)\pi \times (a/2)^3\}/\{(24\sqrt{2}) \times (b/2)^3\} \qquad (\text{Formula 1})$$

In order to enhance the strength, the antireflection film 3 may contain 10 percent by volume or less of binder, and preferably 5 percent by volume or less of binder. However, in order to decrease the refractive index of the antireflection film 3, it is desirable that no binder be contained.

The refractive index of the antireflection film 3 is made to be 1.08 or more and 1.14 or less because the refractive index is decreased by the hollow particles 4 and the gaps 5.

Hollow particles

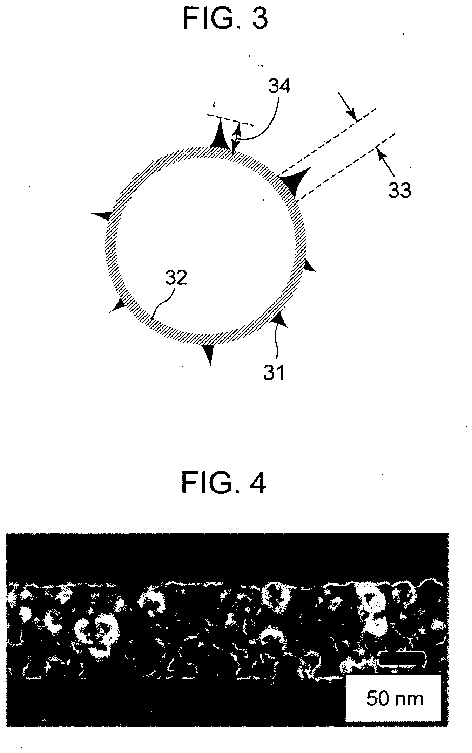

Fig. 3 is a schematic diagram of a hollow particle 4 that has prickle-like protrusions 31 composed of fine prickle-like protrusions on their surface. In the present disclosure, the prickle-like protrusion refers to a needle-like structure that extends in the direction inclined at least 45 degrees to a tangent line of the surface of the hollow particle.

The prickle-like protrusions may be observed by using a scanning electron microscope or scanning transmission electron microscope. Reflection images of the particles are photographed at a magnification of 500,000 times. A plurality of images are photographed such that the number of particles becomes at least 10. The contrast of each image is appropriately processed by using image Pro PLUS (produced by Media Cybernetics, Inc.). Regarding prickle-like protrusions that extend in the direction inclined at least 45 degrees to tangent lines of the surface of the particle, the widths 33 of the base of the prickle-like protrusions, the heights 34 of the prickle-like protrusions, and the proportion of prickle-like protrusions relative to the surface of the particle are determined. The calculation is performed with respect to the surfaces of 10 or more hollow particles present in all photographed images, and the height of the prickle-like protrusion and the proportion of the prickle-like protrusions with respect to the outer periphery of the particle, which are values averaged with respect to the number of particles, are specified as the structural values of the prickle-like protrusion.

The height of the prickle-like protrusion is preferably 3 nm or more and 20 nm or less. If the height of the prickle-like protrusion is less than 3 nm, the distance between particles decreases during film formation and, unfavorably, the refractive index of the antireflection film 3 approaches the refractive index of the hollow particles 4. If the height of the prickle-like protrusion is more than 20 nm, the size of gaps between particles increases and scattering increases.

The proportion of prickle-like protrusions is preferably 3% or more and 30% or less of the surface of the particle. If the proportion of prickle-like protrusions is less than 3% of the surface of the particle, it is difficult to form gaps between the hollow particles 4. If the proportion of prickle-like protrusions is more than 30% of the surface of the particle, the refractive index increases because the proportion of prickle-like protrusions increases relative to the surface of the particle, and the antireflection performance is degraded.

The height of the prickle-like protrusion and the proportion of prickle-like protrusions relative to the surface of the particle are adjusted by adjusting the pH of the solution, the amount of the material for forming the shell, the reaction temperature, and the like.

Regarding the hollow particles 4, the number average particle size of the shapes excluding the prickle-like protrusions is preferably 20 nm or more and 210 nm or less. In the case where the number average particle size of the hollow particles is more than 210 nm, light scattering of the antireflection film 3 increases.

The material used for forming the hollow particles 4 can be a material having a low refractive index, and may be $SiO_2$, $MgF_2$, fluorine, and organic resins, e.g., silicone. Among these, $SiO_2$ and $MgF_2$ can be used, and in particular, $SiO_2$ can be used because the particles are easily produced.

In the method for producing the hollow particles, particles may form particle aggregates including a surfactant and organic materials, e.g., a polymer, between particles in a liquid. At this time, the aggregate refers to a soft chain-like state, where particles do not firmly aggregate. The gap size between particles and the gap size between aggregates are controlled by controlling the size of aggregates. As a result, it is also possible to form an antireflection film 3 having a low refractive index and a still lower level of scattering. If the size of aggregates increases, large voids are generated between aggregates during film formation, and the scattering characteristics become equivalent to these in the related art. Therefore, the size of the chain is more preferably 20 nm or more and 250 nm or less in average.

Method for manufacturing optical member

The antireflection film 3 is obtained by producing a paint containing hollow particles 4 that have a plurality of fine prickle-like protrusions on their surface and, thereafter, performing coating with the resulting paint.

A manufacturing process for producing the hollow particles 4 includes a first step of producing core particles in water, a second step of forming shells having prickle-like protrusions on the surfaces of the core particles, and a third step of producing hollow particles by removing cores while retaining the prickle-like protrusions on their surface. A method for manufacturing the optical member 1 includes a fourth step of preparing a paint containing the hollow particles 4 obtained in the first to third steps and a fifth step of forming a film by coating with the paint. The first to fifth steps will be described below in detail.

First step

The technique to synthesize core particles composed of organic particles can involve emulsion polymerization capable of producing latex particles having relatively uniform particle sizes of 100 nm or less. Examples of monomers usable for emulsion polymerization include styrene, acrylic acid esters, and vinyl acetate. In particular, a monomer of styrene or the like that does not contain an oxygen atom can be used in consideration of the stability in water.

Examples of surfactants usable for emulsion polymerization include water-soluble cationic surfactants, e.g., tetraalkylammonium salts. Specific examples include hexyltrimethylammonium bromide, octyltrimethylammonium bromide, decyltrimethylammonium bromide, dodecyltrimethylammonium bromide, hexadecyltrimethylammonium bromide, and octadecyltrimethylammonium bromide.

Polymerization initiators can be water soluble. Further, water-soluble polymerization initiators of the same cationic type as the surfactants are desirable because the reaction proceeds stably. Examples include 2,2'-azobis[2-(2-imidazoline-2-yl)propane] dihydrochloride, 2,2'-azobis[2-(2-imidazoline-2-yl)propane] disulfate dihydrate, 2,2"-azobis[2-(2-imidazoline-2-yl)propane], 2,2'-azobis(2-methylpropionamidine]dihydrochloride, 2,2"-azobis[N-(2-carboxyethyl)-2-methylpropionamidine] n-hydrate, and 2,2'-azobis[2-methyl-N-(2-hydroxyethyl)propionamide]. These initiators are appropriately selected such that the temperature at a half-life of 10 hours is higher than the temperature condition of the polymerization.

The size of the core particle is preferably 10 nm or more and 200 nm or less. If the size is less than 10 nm, variations in the size unfavorably increase relative to the average particle size. If the size is more than 200 nm, light scattering is unfavorably caused by the antireflection film produced in the fifth step.

The particle size may be measured as a number average particle size by using a dynamic light scattering measuring apparatus Zetasizer Nano ZS (produced by Malvern Instruments, hereafter referred to as DLS).

In general, the zeta potential of a shell material used in the second step is negative except in a strongly acidic case. In order that the shell material with a negative potential be adsorbed onto the surface, the potential of the core is preferably +30 mV or more. The zeta potential may be measured by DLS used in the measurement of the particle size.

Second step

In the second step, shells are formed on the surfaces of the core particles obtained in the first step so as to produce core-shell particles having prickle-like protrusions on their surface. The inorganic component of the resulting shell can be represented by RySiOz (R represents a hydrocarbon group, $0 \le y \le 1$, and $1 \le z \le 2$). The RySiOz component may be obtained by hydrolysis-condensation of a silicon alkoxide. For example, tetraalkoxysilanes typified by trimethoxysilane or triethoxysilane, alkyltrialkoxysilanes typified by methyltrimethoxysilane or methyltriethoxysilane, and mixtures thereof may be used.

The hydrolysis reaction of the silicon alkoxide can proceed under an acidic condition such that prickle-like protrusions are easily formed. In general, it is known from a reaction mechanism that at an initial stage of the hydrolysis of an alkoxide, an oligomer two-dimensionally or anisotropically grows under an acidic condition and an oligomer three-dimensionally or isotropically grows under a basic condition. For example, in the case where hydrolysis-polymerization of silicon alkoxide is performed in an aqueous solution not containing a core particle, elliptical or filler-shaped particles are obtained due to anisotropic growth of the oligomer under the acidic condition, and spherical particles are obtained due to isotropic growth of the oligomer under the basic condition. Consequently, in the case where core-shell particles are produced under the basic condition, unfavorably, the oligomer isotropically grows and a shell shape having a smooth surface is formed.

The zeta potential of the core-shell particles provided with the shells is preferably +15 mV or more. In the case where the zeta potential is less than +15 mV, the repulsive force between the particles decreases and, thereby, particles easily aggregate so as to disperse as aggregated particles having substantially large sizes in a liquid. Consequently, the value of scattering caused by a film after a paint film forming step of performing coating with the paint and forming the film increases. In addition, silica particles that are not hollow can be formed separately, a pH at which the zeta potential becomes -15 mV can be measured in advance, and shells can be synthesized around the cores at the resulting pH. Consequently, the dispersibility of the hollow particles at the time when cores are removed is secured. The surface potential of the core-shell particle may be adjusted by the core material, the shell material, the pH, and the like.

In the second step, it is possible to make the zeta potential of the core-shell particles +15 mV or more by inducing the reaction under a condition of a pH of 3 or more and 6 or less. If the pH is less than 3, the size of the prickle-like protrusion increases because two-dimensional growth of the oligomer excessively proceeds. However, bonding points between oligomers are decreased because of the bulkiness of anisotropically shaped oligomers adhering to core surfaces and, unfavorably, the shell strength is reduced. If the pH is more than 7, core-shell particles having prickle-like protrusions on their surface are not generated. Examples of pH regulators mainly include hydrochloric acid, phosphoric acid, oxalic acid, and sulfuric acid, and common acidic aqueous solutions may be used.

Regarding the core-shell particles, the number average particle size of the shapes excluding the prickle-like protrusions is preferably 20 nm or more and 210 nm or less. In the case where the number average particle size of the core-shell particles is more than 210 nm, light scattering of the antireflection film obtained in the fifth step increases.

The average particle size of the core-shell particles may be measured by using DLS in the same manner as the first step.

Third step

In the third step, the core is taken out of the core-shell particle obtained in the second step so as to form the hollow particle. There is no particular limitation regarding a method for taking out the core. Examples include a known method (Japanese Patent Laid-Open No. 2014-34488) in which the core is hydrophobized by a silane coupling agent or the like and is extracted together with an aromatic organic solvent, e.g., toluene. In the case where an ionic interaction between an cationic organic core component and an anionic hollow particle is strong, it is difficult to refine the hollow particle. Therefore, in particular, an organic solvent, e.g., an aprotic polar solvent that dissolves both the particle and the polymer, can be used.

Fourth step

In the fourth step, in order to produce a hollow particle paint suitable for film formation, components other than the hollow particles and the solvent are removed. Examples of removal methods include filtration, centrifugal separation, ion exchange, and ultrafiltration. These may remove components, e.g., surfactants, initiators, and pH regulators, which are used in the first to third steps. In the case where particle sizes larger than the sizes of the core-shell particles are identified by DLS, the hollow particles are in the form of aggregates. In this case, in order to reduce scattering due to the antireflection film after film formation, unnecessary components can be removed until the sizes of the aggregates become 250 nm or less. The solvent is appropriately changed by distillation or the like so as to become suitable for film formation. Consequently, a high-purity hollow particle paint composed of hollow particles 4 having prickle-like protrusions on their surface and a solvent is obtained. The average particle size of the hollow particles may be measured by using DLS in the same manner as the first step and the second step.

Fifth step

An antireflection film having a low refractive index is obtained by performing coating with the hollow particle paint obtained in the fourth step. In the case where coating is performed by using a volatile organic solvent, the antireflection film is composed of only hollow silica particles and the outside of the particles is the air. Therefore, the refractive index of the film decreases to a great extent. Also, a material may be made into a film on the resulting antireflection film. For example, in the case where a silica oligomer is used, the refractive index increases but an improvement in strength of the film is expected.
The coating method can be solution coating, e.g., spin coating, bar coating, or dip coating, because of convenience and low cost. The hollow particles obtained by the manufacturing method may be made into a film by a method, such as a sputtering method or an evaporation method, and be used as the antireflection film.
An optical element having a surface refractive index decreased to a great extent may be obtained by forming the above-described antireflection film on a transparent material, e.g., plastic or glass.

Exemplary embodiments

The present disclosure will be specifically described below with reference to the exemplary embodiments. However, the present invention is not limited to such exemplary embodiments.
In the examples and comparative examples below, measurements and evaluations were performed by the following methods.

Measurement of particle size

A particle size analyzer (Zetasizer Nano ZS produced by Malvern Instruments) was used, about 1 ml of solution was put into a glass cell, and the measurement was performed at 25°C.

Measurement of height of prickle-like protrusion and calculation of proportion of prickle-like protrusions relative to surface of particle

The prickle-like protrusions were measured in the following procedure.

1. A plurality of reflection images, which were obtained at a magnification of 1,000,000 times by using a scanning transmission electron microscope (HD2300 (product name) produced by Hitachi High-Technologies Corporation), of the particles were photographed.
2. At least 30 particles were extracted at random and were subjected to binarization by using image processing software, e.g., Adobe Photo Shop.

3. The surface of the particle was measured and unevenness having a height of 3 nm or more and 20 nm or less in the vertical direction relative to the surface was regarded as a prickle-like protrusion.

The proportion of prickle-like protrusions relative to the surface of the particle was determined as described below.

4. Regarding each of the particles in the image obtained as described in the item 2 above, the cross-sectional area and the center of gravity of the shape excluding the regions of the prickle-like protrusions were determined, and a perfect circle, which had the same area as the above-described cross-sectional area, was specified, where the perimeter was specified as A and the center was specified as the center of gravity. The prickle-like protrusion was specified as a shape protruded from the above-described perfect circle. At that time, on the perimeter of the perfect circle, the total length of the portions that coincide with the portions of the base of prickle-like protrusions was specified as B. The proportion of prickle-like protrusions relative to the surface of the particle was calculated as B/A.

Measurement of pH in solution

The pH in the aqueous solution was measured by using D-71S produced by HORIBA, Ltd.

Measurement of refractive index

A thin film formed on a silicon wafer was used, and the refractive index was measured in the wavelength range of 380 nm to 800 nm by using a spectroscopic ellipsometer (VASE, produced by J·A·Woolam). At that time, a Cauchy model was applied to the thin film and fitting was performed. The resulting value of the refractive index at a wavelength of 550 nm is shown, in a table, as the refractive index in the present example.

Measurement of size and density of voids in hollow particle film

The size and the density of voids in the hollow particle film were calculated in the following procedure.

1. A reflection image, which was obtained at a magnification of 100,000 times by using a scanning electron microscope (XL30 (product name) produced by Philips), of the particles was photographed.

2. A region, in which particles were present on the outermost surface, and a region, in which a particle was not present, were binarized by using image processing software, e.g., Adobe Photo Shop.

3. A space of 2,000 $nm^2$ or more, in which a particle was not present, in a predetermined cross section was regarded as a void, and the number of voids per $\mu m^2$ was determined.

Measurement of scattering

The resulting thin film in the state of being vertically irradiated with light at illuminance of 4,000 lux was photographed with a camera from behind at an angle of 45°. A range of 700 x 700 pixels that was a range, in which the substrate was reflected, was designated in the resulting image, and the value of brightness analyzed by using the image processing software was taken as a value of scattering.

Regarding a light source, a 150-W halogen fiber illuminator (PHL-150C) was used. The light emitted from the halogen fiber illuminator was passed through a rod homogenizer (RHO-13S-E2), and the illuminance of the light was adjusted to 4,000 lux with an iris diaphragm. The camera used for photographing was a camera (Canon EOS40D) with a camera lens (Compact-Macro Lens EF 50 mm), and photographing was performed under the conditions of a shutter speed of 10 seconds, an aperture of F10, and ISO of 400. Regarding the image processing software, Adobe Photo Shop was used.

Example 1

Silica fine particles were synthesized in advance by adding 2 g of tetraethoxysilane (produced by KISHIDA CHEMICAL Co., Ltd.) to water having a pH of 8.0 and performing agitation for 24 hours. The zeta potential of the fine particles was measured and the values shown in Table 1 were obtained.

Table 1

| pH | 2 | 3 | 4.5 | 5.5 | 6 | 6.5 | 7 | 8 |
|---|---|---|---|---|---|---|---|---|
| SiO2 $\zeta$ potential [mV] | -13 | -22 | -27 | -29 | -30 | -42 | -45 | -51 |

First step

A polystyrene polymer serving as core particles was synthesized by using styrene. After 240 g of water and 5 g of cetyltrimethylammonium bromide aqueous solution having a concentration of 0.01 g/ml (produced by Sigma-Aldrich, hereafter referred to as CTAB) were put into a reaction container, the reaction container was filled with nitrogen and was heated to 80°C. After the heating, 2 ml of analytical grade styrene (produced by KISHIDA CHEMICAL Co., Ltd.) was added, and agitation was performed for 5 minutes. Further, 10 ml of 2,2'-azobis(2-amidinopropane) hydrochloride aqueous solution having a concentration of 0.1 g/ml (hereafter referred to as AIBA) serving as a polymerization initiator of styrene was added, and agitation was performed for 4 hours. After cooling to room temperature was performed, 1 cc of the resulting mixed solution was used, and the number average particle size measured 27.4 nm on the basis of DLS.

Second step

Hydrochloric acid (produced by KISHIDA CHEMICAL Co., Ltd.) was added such that the pH of 245 g of core particle dispersion obtained in the first step was made to be 4.5. At this time, the zeta potential of the core particles measured +47 mV. Thereafter, 2 g of tetraethoxysilane (produced by KISHIDA CHEMICAL Co., Ltd.) was mixed, and agitation was performed so as to prepare a dispersion of core-shell particles. After a lapse of 50 hours, 1 cc of the dispersion was taken out, and the particle size and the zeta potential measured 32.2 nm and +27 mV, respectively, on the basis of DLS. The particles were observed by using a scanning electron microscope. As a result, core-shell type particles having prickle-like protrusions on their surface were identified.

Third step

After 5 g of n-octyldimethylchlorosilane (produced by TOKYO KASEI KOGYO CO., LTD.) and 50 g of toluene were added to 240 g of the core-shell particle dispersion obtained in the second step, agitation was performed for 2 hours. The resulting mixture was left to stand for 24 hours so as to separate into a water layer and a toluene layer.

Fourth step

The water layer obtained in the third step was extracted and was repeatedly passed through an ultrafiltration film with MWCO of 100,000 so as to remove water-soluble impurities and water molecules at the same time while isopropyl alcohol was added. Concentration was also performed by the ultrafiltration, and the ultrafiltration was stopped when a total volume reached 30 cc. After 0.3 g of the resulting solution was dried, observation by using a scanning electron microscope was performed. As a result, hollow particles that had prickle-like protrusions on their surface were identified. Five images were photographed at a magnification of 500,000 times. An average height of prickle-like protrusions and the proportion of prickle-like protrusions relative to the surface of the particle of 23 particles were determined by image processing and the results were 7 nm and 20%, respectively.

Fifth step

A film of 30 cc of the hollow particle paint, which was obtained in the fourth step and which contained isopropyl alcohol solvent, was formed on BK-7 glass by using spin coating. The refractive index of the resulting single-layer film measured 1.11, and the value of scattering measured 19. The base material was cut with a diamond cutter, and a cross section was observed by using a scanning electron microscope. As a result, as shown in Fig. 4, a film, which had a thickness of 123 nm, of stacked particles was observed. The filling ratio of the particles was calculated by using the image of the observed surface and was 70%. In the case where the resulting filling ratio was used, the refractive index of the film was mathematically 1.14. Therefore, it was ascertained that the refractive index might further decrease by 0.03.

The physical properties of the particles and the antireflection film in the example were as described in Table 2.

Example 2

First step and Second step

Core-shell type particles of 33.5 nm having prickle-like protrusions on their surface were obtained in the same manner as Example 1 except that the pH was adjusted to 3.0. The zeta potential measured +30 mV. Third step and fourth step

Hollow particles, in which the average height of prickle-like protrusions was 12 nm and the proportion of prickle-like protrusions was 25% of the surface of the particle, were identified in the same manner as Example 1. Fifth step

Film formation of hollow particles was performed in the same manner as Example 1. As a result, the refractive index of the film was 1.12 and the value of scattering was 20. The filling ratio of the particles was calculated by using the image of the observed surface and was 65%. The refractive index anticipated from the resulting filling ratio was 1.15. Therefore, it was ascertained that the refractive index decreased by 0.03.

Example 3

First step and second step

Core-shell type particles of 33.6 nm having prickle-like protrusions on their surface were obtained in the same manner as Example 1 except that the pH was adjusted to 5.5.

Third step and fourth step

Hollow particles, in which the average height of prickle-like protrusions was 5 nm and the proportion of prickle-like protrusions was 10% of the surface of the particle, were identified in the same manner as Example 1. Fifth step
Film formation of hollow particles was performed in the same manner as Example 1. As a result, the refractive index of the film was 1.11 and the value of scattering was 20. The filling ratio of the particles was calculated by using the image of the observed surface and was 68%, The refractive index anticipated from the resulting filling ratio was 1.14. Therefore, it was ascertained that the refractive index decreased by 0.03.

Example 4

First step and second step

Core-shell type particles of 33.4 nm having prickle-like protrusions on their surface were obtained in the same manner as Example 1 except that the pH was adjusted to 6.0. The zeta potential measured +17 mV. Third step and fourth step
Hollow particles, in which the average height of prickle-like protrusions was 4 nm and the proportion of prickle-like protrusions was 9% of the surface of the particle, were identified in the same manner as Example 1. Fifth step
Film formation of hollow particles was performed in the same manner as Example 1. As a result, the refractive index of the film was 1.11 and the value of scattering was 21. The filling ratio of the particles was calculated by using the image of the observed surface and was 67%. The refractive index anticipated from the resulting filling ratio was 1.14. Therefore, it was ascertained that the refractive index decreased by 0.03.

Comparative example 1

First step and second step

A first step was performed in the same manner as Example 1. Thereafter, in a second step, the pH was adjusted to 6.5, 2 g of tetraethoxysilane (produced by TOKYO KASEI KOGYO CO., LTD.) serving as a silicon alkoxide was mixed, and agitation was performed. As a result, after agitation was performed for 3 hours, aggregation of particles was visually identified. The size of a particle was estimated by using a scanning transmission electron microscope and was about 33 nm. However, no prickle-like protrusion was observed on the surface. The zeta potential of the aggregated particles measured +7 mV.

Third step and fourth step

The resulting particles were observed by using a scanning electron microscope in the same manner as Example 1. As a result, aggregates of hollow particles having no prickle-like protrusions were identified.

Fifth step

Film formation of hollow particles was performed in the same manner as Example 1. As a result, the refractive index of the film was 1.22 and the value of scattering was 75.

Example 5

First step and second step

Steps were performed in the same manner as

Example 1.

Third step

After 240 g of tetrahydrofuran (THF) was added to 240 g of core-shell particle dispersion obtained in the second step, agitation was performed for 1 hour.

Fourth step

The mixture of water and THF obtained in the third step was repeatedly passed through an ultrafiltration film with MWCO of 100,000 so as to remove water-soluble impurities and water molecules at the same time while isopropyl alcohol was added. Concentration was also performed by the ultrafiltration, and the ultrafiltration was stopped when a total volume reached 30 cc. At this time, the size of aggregate of hollow particles measured 348 nm on the basis of DLS. Therefore, the ultrafiltration was further performed until the size of the aggregate reached 229 nm.

Fifth step

Film formation of hollow particles was performed in the same manner as Example 1. As a result, the refractive index of the film was 1.09 and the value of scattering was 16. The density of voids in the hollow particle film was measured. As a result, the number of void spaces of 2,000 $nm^2$ or more, in which a particle was not present, was $1/\mu m^2$ in a predetermined cross section.

Example 6

First step to third step

Steps were performed in the same manner as Example 5.

Fourth step

First ultrafiltration was performed in the same manner as Example 5 and, thereafter, second ultrafiltration was performed until the size of the aggregate of the hollow particles reached 159 nm.

Fifth step

Film formation of hollow particles was performed in the same manner as Example 1. As a result, the refractive index of the film was 1.10 and the value of scattering was 8.5. The density of voids in the hollow particle film was measured. As a result, a void space of 2,000 $nm^2$ or more, in which a particle was not present, was not identified in a predetermined cross section.

Comparative example 2

First step and second step

Core-shell particles were synthesized in the same manner as Comparative example 1 except that the pH was adjusted to 8.0 in the second step. As a result, after agitation was performed for 5 hours, aggregation of particles was visually identified. The size of a particle was estimated by using a scanning transmission electron microscope and was about 33 nm. No prickle-like protrusion was observed on the surface of the particle. The zeta potential of the aggregated particles measured +4 mV. Third step and fourth step
The resulting particles were observed by using a scanning electron microscope in the same manner as Example 1. As a result, aggregates of hollow particles having no prickle-like protrusions were identified.

Fifth step

Film formation of hollow particles was performed in the same manner as Example 1. As a result, the refractive index of the film was 1.21 and the value of scattering was 82.

Comparative example 3

First step and second step

Core-shell type particles of 31.9 nm having prickle-like protrusions on their surface were obtained in the same manner as Comparative example 1 except that the pH was adjusted to 2.0 in the second step. The zeta potential measured +32 mV. The prickle-like protrusions were measured. As a result, the average height of prickle-like protrusions was 22 nm and the proportion of prickle-like protrusions was 35% of the surface of the particle.

Third step

After 0.3 g was taken out of each of the water layer and the toluene layer obtained in the same manner as Example 1, drying was performed, and observation was performed by using a scanning electron microscope. As a result, a hollow particle was not observed.

Comparative example 4

Examinations were performed by using hollow silica particle paint (Thrulya 1110), produced by JGC Catalysts and Chemicals Ltd., having a concentration of 20 percent by weight. Particles were observed by using a scanning electron microscope and, as a result, hollow particles having no prickle-like protrusions were identified. The particle paint was diluted with isopropyl alcohol such that the concentration became 5 percent by weight, and film was formed by spin coating. The refractive index and the value of scattering of the resulting film were measured. As a result, the refractive index was 1.19, and the value of scattering was 22. Twenty particles were arbitrarily selected from the image photographed by using the scanning electron microscope, the refractive index of the hollow particles was estimated on the basis of the ratio of the two-dimensional hollow to silica, and, thereby 1.258 was obtained. The filling ratio was 70% and, therefore, the calculated value of the refractive index of the film was 1.19, which was the same value as the actually measured value.

Table 2

| | Core particle | | | Core-shell particle | | Hollow particle | | | | Antireflection film | | | |
|---|---|---|---|---|---|---|---|---|---|---|---|---|---|
| | pH | Average particle size | ζ potential | Average particle size | ζ potential | Average particle size | Size of prickle-like protrusion | Proportion of prickle-like protrusions | Size of aggregate | Refractive index | Scattering | Filling ratio | Density of voids of 2,000 $nm^2$ or more |
| Example 1 | 4.5 | 27.4nm | +47mV | 33.2nm | +27mV | 33.2nm | 7nm | 20% | 261nm | 1.11 | 19 | 70% | 5/$\mu m^2$ |
| Example 2 | 3.0 | 27.4nm | +49mV | 33.5nm | +30mV | 33.5nm | 12nm | 25% | 294nm | 1.12 | 20 | 65% | 5/$\mu m^2$ |
| Example 3 | 5.5 | 27.4nm | +46mV | 33.6nm | +23mV | 33.6nm | 5nm | 10% | 280nm | 1.11 | 20 | 65% | 5/$\mu m^2$ |
| Example 4 | 6.0 | 27.4nm | +46mV | 33.4nm | +17mV | 33.4nm | 4nm | 9% | 354nm | 1.11 | 21 | 65% | 5/$\mu m^2$ |
| Example 5 | 4.5 | 27.4nm | +47mV | 33.2nm | +27mV | 33.2nm | 7nm | 20% | 229nm | 1.09 | 16 | 68% | 1/$\mu m^2$ |
| Example 6 | 4.5 | 27.4nm | +47mV | 33.2nm | +27mV | 33.2nm | 7nm | 20% | 159nm | 1.10 | 8.5 | 67% | 0/$\mu m^2$ |
| Comparative example 1 | 6.5 | 27.4nm | +45mV | 33nm | +7mV | 33nm | - | - | - | 1.21 | 75 | - | - |
| Comparative example 2 | 8.0 | 27.4nm | +43mV | 33nm | +4mV | 33nm | - | - | - | 1.22 | 82 | - | - |
| Comparative example 3 | 2.0 | 27.4nm | +45mV | 31.9nm | +32mV | 31.9nm | | - - | - | - | | | |
| Comparative example 4 | commercially available hollow particle | | | | | | - | - | - | 1.19 | 22 | 70% | 1/$\mu m^2$ |

While the present disclosure has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

**Claims**

1. An optical member comprising:

   a base material (2) that transmits visible light;
   a film (3) disposed on the base material (2);
   wherein, the film (2) includes a plurality of hollow particles (4) having a surface and prickle-like protrusions on the surface,
   the heights (34) of the prickle-like protrusions are 3 nm or more and 20 nm or less and the proportion of the prickle-like protrusions is 3% or more and 30% or less of the surface of the plurality of hollow particles, and
   the film (3) includes 50 percent by volume or more and 68 percent by volume or less of the plurality of hollow particles (4).

2. The optical member according to Claim 1,
   wherein the number average particle size of the plurality of hollow particles (4) is 20 nm or more and 210 nm or less.

3. The optical member according to Claim 1,
   wherein the plurality of hollow particles (4) are silica particles.

4. The optical member according to Claim 1,
   wherein the number of interparticle voids of 2,000 $nm^2$ or more in a predetermined cross section of the film (3) is $1/\mu m^2$ or less.

5. The optical member according to Claim 1,
   wherein the refractive index of the film (3) is 1.08 or more and 1.14 or less.

6. The optical member according to Claim 1,
   wherein the optical member (1) is a lens or a prism.

7. An antireflection film comprising:

   hollow particles (4) that have a surface and prickle-like protrusions on the surface,
   wherein the heights (34) of the prickle-like protrusions are 3 nm or more and 20 nm or less and the proportion of the prickle-like protrusions is 3% or more and 30% or less of the surface, and
   the antireflection film (3) is filled with 50 percent by volume or more and 68 percent by volume or less of the hollow particles (4).

8. The antireflection film according to Claim 7,
   wherein the number average particle size of the hollow particles (4) is 20 nm or more and 210 nm or less.

9. The antireflection film according to Claim 7,
   wherein the hollow particles (4) are silica particles.

10. The antireflection film according to Claim 7,
    wherein the number of interparticle voids of 2,000 $nm^2$ or more in a predetermined cross section of the antireflection film (3) is $1/\mu m^2$ or less.

11. The antireflection film according to Claim 7,
    wherein the refractive index of the film (3) is 1.08 or more and 1.14 or less.

12. A method for manufacturing hollow particles that have a surface and prickle-like protrusions on the surface, comprising:

forming core-shell particles that have prickle-like protrusions on the surfaces of core particles by hydrolyzing silicon alkoxide under a condition of a pH of 3 or more and 6 or less, and
producing hollow particles (4) by removing the core particles from the resulting core-shell particles.

13. The method for manufacturing hollow particles according to Claim 12,
wherein the silicon alkoxide is tetraalkoxysilane.

14. A method for manufacturing an optical member comprising:

producing an antireflection film (3) on a base material by coating the base material (2) with a paint containing hollow particles (4) produced according to Claim 12 and an organic solvent.

# FIG. 1

<u>1</u>

# FIG. 2

<u>11</u>

# FIG. 3

# FIG. 4

50 nm

Europäisches
Patentamt

European
Patent Office

Office européen
des brevets

# EUROPEAN SEARCH REPORT

Application Number

EP 17 00 0093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2015/132564 A1 (ARFSTEN NANNING JOERG [NL] ET AL) 14 May 2015 (2015-05-14)<br>* abstract *<br>* paragraphs [0001], [0004], [0010], [0012], [0022], [0026], [0066], [0073] - [0075], [0081], [0082], [0085] - [0115], [0132], [0135]; claim 18; table 2 * | 1-10, 12-14<br><br>1-11 | INV.<br>G02B1/11<br>B82Y30/00<br>C01B33/145<br>G02B1/113 |
| Y | US 2011/195239 A1 (TAKANE NOBUAKI [JP] ET AL) 11 August 2011 (2011-08-11)<br>* abstract; figure 5 *<br>* paragraphs [0252] - [0256], [0266] - [0268], [0299], [0300], [0305], [0360], [0361], [0429], [0430]; claim 41 * | 1-11 | |
| A | US 2004/028918 A1 (BECKER HANS-JOACHIM [DE] ET AL) 12 February 2004 (2004-02-12)<br>* abstract *<br>* paragraphs [0015] - [0026], [0032], [0034], [0038] * | 1-14 | |
| A | US 2012/276290 A1 (ZHAO XIAOJUN JULIA [US] ET AL) 1 November 2012 (2012-11-01)<br>* paragraph [0011] - paragraphs [0034], [0049] - [0053]; figure 1 * | 1-14 | TECHNICAL FIELDS SEARCHED (IPC)<br><br>G02B<br>B82Y<br>C01B |
| A | US 6 103 379 A (MARGEL SHLOMO [IL] ET AL) 15 August 2000 (2000-08-15)<br>* abstract; figures 1,2 *<br>* column 2, line 40 - line 48 *<br>* column 6, line 34 - line 64 *<br>* column 11, line 4 - line 6 * | 1-14 | |

The present search report has been drawn up for all claims

| Place of search | Date of completion of the search | Examiner |
|---|---|---|
| Munich | 29 May 2017 | Blau, Gerd |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 17 00 0093

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2017

| Patent document cited in search report | | Publication date | Patent family member(s) | | Publication date |
|---|---|---|---|---|---|
| US 2015132564 | A1 | 14-05-2015 | AU | 2013265441 A1 | 27-11-2014 |
| | | | CA | 2872446 A1 | 28-11-2013 |
| | | | CN | 104334269 A | 04-02-2015 |
| | | | CN | 104334652 A | 04-02-2015 |
| | | | EP | 2852455 A1 | 01-04-2015 |
| | | | EP | 2852641 A2 | 01-04-2015 |
| | | | HK | 1206672 A1 | 15-01-2016 |
| | | | HK | 1206770 A1 | 15-01-2016 |
| | | | JP | 2015526530 A | 10-09-2015 |
| | | | JP | 2015526531 A | 10-09-2015 |
| | | | KR | 20150013558 A | 05-02-2015 |
| | | | KR | 20150013559 A | 05-02-2015 |
| | | | TW | 201400558 A | 01-01-2014 |
| | | | TW | 201406452 A | 16-02-2014 |
| | | | US | 2015132479 A1 | 14-05-2015 |
| | | | US | 2015132564 A1 | 14-05-2015 |
| | | | WO | 2013174753 A1 | 28-11-2013 |
| | | | WO | 2013174754 A2 | 28-11-2013 |
| US 2011195239 | A1 | 11-08-2011 | CN | 102186668 A | 14-09-2011 |
| | | | EP | 2347896 A1 | 27-07-2011 |
| | | | JP | 5720247 B2 | 20-05-2015 |
| | | | JP | 2015064607 A | 09-04-2015 |
| | | | KR | 20110084957 A | 26-07-2011 |
| | | | MY | 157487 A | 15-06-2016 |
| | | | TW | 201026796 A | 16-07-2010 |
| | | | US | 2011195239 A1 | 11-08-2011 |
| | | | WO | 2010044402 A1 | 22-04-2010 |
| US 2004028918 | A1 | 12-02-2004 | AT | 314325 T | 15-01-2006 |
| | | | AU | 1055102 A | 29-04-2002 |
| | | | DE | 10051724 A1 | 02-05-2002 |
| | | | EP | 1328483 A1 | 23-07-2003 |
| | | | JP | 4278975 B2 | 17-06-2009 |
| | | | JP | 2004511418 A | 15-04-2004 |
| | | | US | 2004028918 A1 | 12-02-2004 |
| | | | WO | 0232823 A1 | 25-04-2002 |
| US 2012276290 | A1 | 01-11-2012 | US | 2012276290 A1 | 01-11-2012 |
| | | | US | 2014065166 A1 | 06-03-2014 |
| US 6103379 | A | 15-08-2000 | NONE | | |

EPO FORM P0459

For more details about this annex : see Official Journal of the European Patent Office, No. 12/82

**EP 3 199 984 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001233611 A
- JP 2013041275 A

- JP 2014034488 A